# EUROPEAN PATENT APPLICATION

(11) **EP 4 327 894 A1**
(43) Date of publication of application: **28.02.2024**
(21) Application number: 21937399.0
(22) Date of filing: 28.04.2021
(51) Int. Cl.: A62C 27/00

(54) **FIRE TRUCK**

(30) Priority: 21.04.2021 CN 202110430695
(71) Applicant: XCMG Fire-Fighting Safety Equipment Co., Ltd., Xuzhou, Jiangsu 221100 (CN); Xuzhou Construction Machinery Group Co., Ltd., Xuzhou, Jiangsu 221004 (CN)
(72) Inventor: TIAN, Zhijian, Xuzhou, Jiangsu 221100 (CN); XU, Xiaodong, Xuzhou, Jiangsu 221100 (CN); ZHANG, Jianhua, Xuzhou, Jiangsu 221100 (CN); ZHAO, Yangguang, Xuzhou, Jiangsu 221100 (CN); LI, Weidong, Xuzhou, Jiangsu 221100 (CN)
(74) Representative: Andrejewski - Honke Patent- und Rechtsanwälte Partnerschaft mbB
(86) International application number: PCT/CN2021/090490
(87) International publication number: WO 2022/222171

(57) **Abstract**

The present disclosure discloses a firefighting truck, which relates to the field of high-altitude firefighting technologies, and is used for improving the high-rise fire extinguishing ability of a firefighting truck. The firefighting truck includes a truck body, an arm support, a support platform, an unmanned aerial vehicle, a transfer pipeline and a water hose. The truck body is configured to be walkable; the arm support is installed on the truck body; the support platform is installed at the tail end of the arm support; the unmanned aerial vehicle is installed on the support platform; the transfer pipeline is installed on the arm support; one end of the water hose is in fluid communication with the transfer pipeline, and the other end of the water hose is detachably connected with the unmanned aerial vehicle. The firefighting truck provided by the above technical solution realizes high-altitude firefighting of a larger height. Moreover, under the same firefighting height requirements, the length of the water hose towed by the unmanned aerial vehicle is shorter and the load of the unmanned aerial vehicle is smaller, so that the fire extinguishing agent of a large flow of can be used for firefighting, and the fire extinguishing ability will be improved.

## Description

### CROSS-REFERENCE TO RELATED APPLICATIONS

This application is based on and claims priority to Chinese Patent Application No. 2022110430695.7, filed on April 21, 2021, which is hereby incorporated by reference in its entirety.

### FIELD OF THE INVENTION

The present disclosure relates to the field of high-altitude firefighting technologies, in particular to a firefighting truck.

### DESCRIPTION OF RELATED ART

The number of urban high-rise buildings in China has ranked first in the world. Fires of the high-rise buildings have the characteristics of fast fire spread speed, difficulty in evacuation and difficulty in fire remedy. In the case of design defects or insufficient maintenance of building's own firefighting systems, once the fire breaks out in the building and cannot be put out in time, or if there is a fire in the outer layer or an unfinished building, a disaster event often occurs possibly. In the related art, the number of chassis axles of large-sized firefighting trucks over 80 meters for rescue by elevating spraying firefighting outside the buildings is more than 5, and the length of the firefighting trucks is particularly large, which causes poor maneuverability of the firefighting trucks. At present, the height of large-sized elevating firefighting trucks difficultly exceeds 120 meters around the world, and an operation space is also limited by the site outside a burning building. In addition, the single large-sized elevating firefighting truck is expensive, the use and maintenance costs are huge, and the configuration of urban firefighting rescue teams is limited. Therefore, rescue of the high-rise building fires is a worldwide problem.

In recent years, in order to improve the rapid high-rise firefighting response ability and fire rescue of a larger height, the technologies of applying unmanned aerial vehicles to firefighting have emerged and are specifically divided into the following four types: (1) the unmanned aerial vehicles are used to carry and launch firefighting bombs to realize high-rise firefighting; (2) the unmanned aerial vehicles are used to carry and spray a fire extinguishing agent to realize high-rise firefighting; (3) the unmanned aerial vehicles are used to throw water hoses to assist the high-rise firefighting of urban main battle firefighting trucks; (4) and the unmanned aerial vehicles are used to tow the water hoses for the high-rise firefighting in combination with the urban main battle firefighting trucks or ground movable foam preparation systems.

Inventors found that, limited by current load capacities of the unmanned aerial vehicles, the above respective ways have great shortcomings in firefighting efficiency or operation flexibility or operation height.

### SUMMARY OF THE INVENTION

Embodiments of the present disclosure provide a firefighting truck, including:
a truck body configured to be walkable;
an arm support installed on the truck body;
a support platform installed at the tail end of the arm support;
an unmanned aerial vehicle installed on the support platform;
a transfer pipeline installed on the arm support; and
a water hose, one end of which being in fluid communication with the transfer pipeline and the other end of which being detachably connected with the unmanned aerial vehicle.

In some embodiments, the firefighting truck further includes:
a fire monitor installed on the support platform; and
a firefighting pipeline in fluid communication with the fire monitor.

In some embodiments, the firefighting truck further includes:
a first control valve disposed on the transfer pipeline and configured to control whether the transfer pipeline is opened or not; and
a second control valve disposed on the firefighting pipeline and configured to control whether the firefighting pipeline is opened or not;
wherein a working state of the first control valve and a working state of the second control valve are opposite.

In some embodiments, the firefighting truck further includes:
a storage device installed at the bottom of the support platform, wherein the storage device is provided with a storage cavity; one end of the water hose is in fluid communication with the transfer pipeline, the other end of the water hose is in fluid communication with a conveying pipe of the unmanned aerial vehicle, and the middle part of the water hose is folded and stored in the storage cavity; wherein the bottom of the storage device is configured to be openable and closable.

In some embodiments, the arm support is configured to have a first posture and a second posture; wherein under the first posture, the fire monitor of the firefighting truck is used for firefighting, and the arm support is free for amplitude variation; under the second posture, the arm support remains motionless, and the unmanned aerial vehicle is used for firefighting.

In some embodiments, the firefighting truck further includes:
a data processing module installed at the support platform or the top end of the arm support, wherein the unmanned aerial vehicle includes a data transmission module, and the data processing module is in communication connection with the data transmission module in a wireless way; and
an unmanned aerial vehicle console also in communication connection with the data processing module, and configured to control flying of the unmanned aerial vehicle, a conveying amount of a fire extinguishing agent and/or whether to convey the fire extinguishing agent, or whether to unload the fire extinguishing agent in a pipeline according to state parameters of the unmanned aerial vehicle transmitted by the data transmission module and obtained by the data processing module as well as preset parameters of the unmanned aerial vehicle, so as to ensure that the unmanned aerial vehicle does not crash due to excessive towing.

In some embodiments, the preset parameters of the unmanned aerial vehicle at least include one of the following: a predetermined load capacity of the unmanned aerial vehicle, a limit value of the unmanned aerial vehicle on an ambient wind speed, and a set distance allowing the unmanned aerial vehicle to stay away from a takeoff point.

In some embodiments, the unmanned aerial vehicle console is installed on the truck body.

In some embodiments, the firefighting truck further includes:
a camera installed at the top end of the arm support or the support platform, the camera being configured to monitor obstacle information in a takeoff process of the unmanned aerial vehicle.

In some embodiments, the firefighting truck further includes:
a locking mechanism installed on the support platform to fix the unmanned aerial vehicle and the support platform.

In some embodiments, the top end of the transfer pipeline extends to the support platform, and the bottom end of the transfer pipeline is located at the truck body.

In some embodiments, the unmanned aerial vehicle includes:
a body;
a plurality of rotor wings, each of which being disposed at the top of the body; and
a fire extinguishing agent spraying device including a conveying pipe and a spraying pipe, wherein the conveying pipe penetrates from the bottom of the body to the top of the body, the spraying pipe is in fluid communication with the conveying pipe, and the position of the spraying pipe is higher than the positions of the rotor wings.

In some embodiments, the conveying pipe includes:
a first pipeline located below the body;
second pipelines located downstream of the first pipeline and in fluid communication with the first pipeline, wherein at least two second pipelines are disposed, and respective second pipelines are symmetrically disposed relative to a central axis of the body; and
a third pipeline located downstream of the respective second pipelines and in fluid communication with the respective second pipelines.

In some embodiments, the firefighting truck further includes:
two electric control locking devices, one of which being disposed on the transfer pipeline to lock and unlock one end of the water hose and the transfer pipeline; wherein the other electric control locking device is disposed at the other end of the first pipeline to lock and unlock the first pipeline and the top end of the water hose.

In some embodiments, the firefighting truck further includes:
a compressed air foam system assembly installed on the truck body and in fluid communication with the transfer pipeline so as to convey the fire extinguishing agent to the transfer pipeline; the compressed air foam system assembly being configured to prepare a foam fire extinguishing agent with set parameters.

In some embodiments, the set parameters at least include one of the following: foam foaming times, a flow of a foam mixed liquid, and a foam pressure.

The firefighting truck according to the above technical solution has the amplitude-variable arm support, the support platform, the unmanned aerial vehicle, the water hose and the transfer pipeline simultaneously. The unmanned aerial vehicle is installed on the support platform, and the support platform is lifted by the arm support, so that the unmanned aerial vehicle can directly take off from the support platform in high altitude by amplitude variation without a need to take off from the ground or near the truck body. In addition, the water hose towed by the unmanned aerial vehicle is also in fluid communication with the transfer pipeline, the transfer pipeline is in fluid communication with the existing foam system on the firefighting truck, and one end of the water hose is directly located in midair instead of being on the truck body, so that the firefighting truck according to the embodiments of the present disclosure realizes high-altitude firefighting of a larger height when using the water hose of the same length. Moreover, under the same firefighting height requirements, the length of the water hose towed by the unmanned aerial vehicle is shorter and the load of the unmanned aerial vehicle is smaller, so that the fire extinguishing agent of a large flow can be used for firefighting, and the fire extinguishing ability will be improved.

### BRIEF DESCRIPTION OF THE DRAWINGS

Fig. 1 is a main schematic diagram of a firefighting truck according to embodiments of the present disclosure.
Fig. 2 is a partially enlarged schematic diagram of a firefighting truck according to embodiments of the present disclosure.
Fig. 3 is a partially enlarged schematic diagram of a firefighting truck according to some other embodiments of the present disclosure.
Fig. 4 is a schematic diagram of relative positions of a support platform of a firefighting truck when an arm support is in two working modes according to some other embodiments of the present disclosure.
Fig. 5 is an enlarged schematic diagram of part M of Fig. 4.
Fig. 6 is a flowchart of a firefighting control method of a firefighting truck according to some other embodiments of the present disclosure.
Fig. 7 is a flowchart of a firefighting control method of a firefighting truck according to still some other embodiments of the present disclosure.

### DESCRIPTION OF THE INVENTION

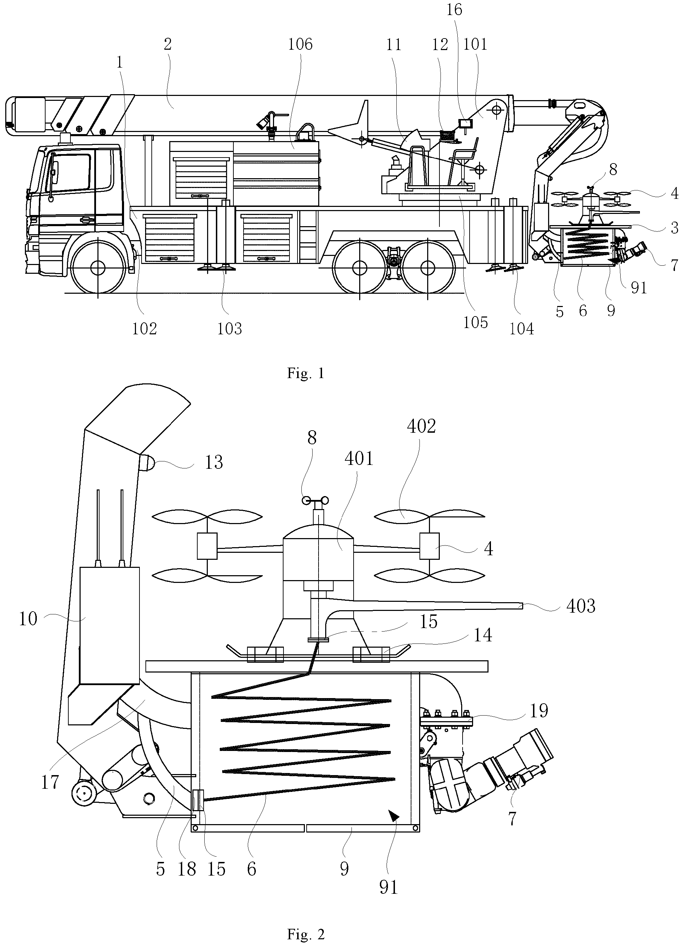

The technical solutions provided by the present disclosure will be described in more detail with reference to Fig. 1 to Fig. 7.

Referring to Fig. 1, embodiments of the present disclosure provide a firefighting truck, which includes a truck body 1, an arm support 2, a support platform 3, an unmanned aerial vehicle 4, a transfer pipeline 5 and a water hose 6. The truck body 1 is configured to be walkable. The arm support 2 is mounted on the truck body 1, and the arm support 2 is configured to be amplitude-variable. The support platform 3 is installed at the tail end of the arm support 2. The unmanned aerial vehicle 4 is installed on the support platform 3. The transfer pipeline 5 is installed on the arm support 2. One end of the water hose 6 is in fluid communication with the transfer pipeline 5, and the other end of the water hose 6 is detachably connected with the unmanned aerial vehicle 4.

The firefighting truck is a medium-sized firefighting truck or a small-sized firefighting truck with an elevating capacity of 40-50 meters. This type of firefighting trucks have smaller overall size and good maneuverability, and the time required for an elevating operation is very short, which can quickly realize firefighting of the coupled unmanned aerial vehicle 4.

The truck body 1 of the firefighting truck is divided by a rotary support 105 at a turntable 101, and is divided into an upper truck and a lower truck. The lower truck has a chassis 102, a front support leg 103, a rear support leg 104 and a compressed air foam system assembly 106. The system automatically adjusts a supply pressure and a flow. The upper truck has the arm support 2, the transfer pipeline 5, the unmanned aerial vehicle 4, the support platform 3, and a storage device 9, a data processing module 10 and the like which are described later. The arm support 2 is, for example, a combined arm support.

The arm support 2 is an amplitude-variable arm support, or a telescopic arm support, or has both amplitude variation and telescopic functions. By taking the amplitude-variable arm support 2 as an example, the tail end of the arm support 2 refers to the top end of the arm support 2 after amplitude variation. After amplitude variation, the arm support 2 will be lifted together with the support platform 3, so that the unmanned aerial vehicle 4 and a fire monitor 7 installed on the support platform 3 will be lifted therewith. When the unmanned aerial vehicle 4 is used for firefighting subsequently, the unmanned aerial vehicle 4 does not take off from the truck body 1 or the ground, but takes off from the raised support platform 3, which shortens a flying distance required for the unmanned aerial vehicle 4 to launch, shortens flying time, reduces power consumption of the unmanned aerial vehicle 4 and prolongs working time of the unmanned aerial vehicle 4.

On the other hand, the water hose 6 is not directly connected to the compressed air foam system assembly 106 on the truck body 1, but is connected to the transfer pipeline 5, and the transfer pipeline 5 conveys fire extinguishing agent foam in the compressed air foam system assembly 106 to a certain height. In the embodiments described later, the fire extinguishing agent foam is directly conveyed to the support platform 3, so that the water hose 6 directly receives the fire extinguishing agent foam from the transfer pipeline 5, that is, receives the fire extinguishing agent foam from midair, which enables the length of the water hose 6 to be shorter for the same firefighting height requirements. When the unmanned aerial vehicle 4 tows the water hose 6 to fly, the weight of the water hose 6 is light, and the load borne by the unmanned aerial vehicle 4 is small. Therefore, the defect of an insufficient load capacity of the unmanned aerial vehicle in the related art is better compensated, and continuous spraying with larger flow or larger height is realized for rescue of high-rise fires.

The firefighting truck provided by the above technical solution not only realizes the conventional elevating spraying firefighting function, but also enable the existing fire extinguishing agent conveying pipeline (i.e., a firefighting pipeline) of the elevating firefighting truck to supply a fire extinguishing agent to the transfer pipeline 5 at the top end of the arm support 2 by switching a first control valve 18 and a second control valve 19 which are described later. The unmanned aerial vehicle 4 is in fluid communication with the transfer pipeline 5 through the water hose 6 to realize high-altitude transfer to obtain the fire extinguishing agent, so as to take off for high-rise firefighting. The above technical solution can be used for high-altitude firefighting, and the unmanned aerial vehicle 4 tows the ultra-light water hose 6 to form a coupled system with the elevating firefighting truck for combined rescue of the high-rise building fires; and the high-rise building fires with higher meters are rescued efficiently, flexibly and economically. Moreover, the flow of the fire extinguishing agent sprayed by the unmanned aerial vehicle 4 is large.

Specific implementations of respective parts are described in detail below.

Firstly, an installation relationship of the unmanned aerial vehicle 4 is introduced. Referring to Fig. 1 and Fig. 2, the unmanned aerial vehicle 4 is installed on the support platform 3, and the unmanned aerial vehicle 4 and the support platform 3 are unlocked when the unmanned aerial vehicle 4 is required to perform a firefighting task. At other times, the unmanned aerial vehicle 4 and the support platform 3 are kept locked.

Referring to Fig. 2, in some embodiments, the firefighting truck further includes a locking mechanism 14, and the locking mechanism 14 is installed on the support platform 3 to fix the unmanned aerial vehicle 4 and the support platform 3.

The locking mechanism 14 has many implementations. The locking mechanism 14 is electrically connected with an unmanned aerial vehicle console 12. By operating the unmanned aerial vehicle console 12, whether the unmanned aerial vehicle 4 and the support platform 3 are locked or the unmanned aerial vehicle 4 and the support platform 3 are unlocked is controlled by the locking mechanism 14.

Next, an installation relationship of the transfer pipeline 5 will be introduced. Referring to Fig. 1 and Fig. 2, in some embodiments, the top end of the transfer pipeline 5 extends to the support platform 3, and the bottom end of the transfer pipeline 5 is located at the truck body 1. In this way, the unmanned aerial vehicle 4 uses the transfer pipeline 5, and the length of the water hose 6 towed by the unmanned aerial vehicle 4 is as short as possible under the same height firefighting requirements.

Compared with the related art in which the unmanned aerial vehicle tows the water hose for high-rise firefighting in combination a urban main battle firefighting truck or a ground movable foam preparation system, the firefighting truck according to the embodiments of the present disclosure only needs a shorter water hose 6 to reach the same firefighting height since the fire extinguishing agent is transferred and supplied in high altitude, thereby having better pipeline conveying capacity for the fire extinguishing agent. If a carrying capacity of the unmanned aerial vehicle 4 is fully used, its operation height is higher when the water hose 6 of the same length is towed; when the operation height is the same, the water hose 6 with a larger diameter is also towed. A fire extinguishing agent conveying channel of the elevating firefighting truck is fully used, and this channel achieves a larger diameter (generally ≥ DN80) than the water hose 6. Therefore, the overall conveying pressure loss of the fire extinguishing agent will be smaller. In this way, the unmanned aerial vehicle 4 is supported to tow the water hose 6 to reach a larger height for the firefighting operation in the future under the condition that the maximum pressure of the compressed air foam system remains unchanged (the current maximum pressure is ≤ 1.2 MPa), or the flow of the fire extinguishing agent can be further increased without increasing the height.

Referring to Fig. 1 and Fig. 2, in some embodiments, the firefighting truck further includes the storage device 9, and the storage device 9 is installed at the bottom of the support platform 3 and is provided with a storage cavity 91. One end of the water hose 6 is in fluid communication with a conveying pipe 404 of the unmanned aerial vehicle 4, the other end of the water hose 6 is in fluid communication with the transfer pipeline 5 of the firefighting truck, and the middle part of the water hose 6 is stored in the storage cavity 91. The bottom of the storage device 9 is configured to be openable and closable. A bottom plate of the storage device 9 is disposed to be split, and the bottom of the storage device 9 is quickly opened by rotating each half of the bottom plate.

After the bottom plate of the storage device 9 is opened, an overlapping part of the water hose 6 is lowered by its own weight, so that the unmanned aerial vehicle 4 launches for operation. The whole operation flow is as follows: the bottom plate of the storage device 9 is opened, so that the water hose 6 falls under its own gravity, that is, the water hose 6 is no longer folded; after the unmanned aerial vehicle 4 is unlocked, the unmanned aerial vehicle 4 flies up to a certain height to hover; after the fire extinguishing agent is stably conveyed to the unmanned aerial vehicle 4, the unmanned aerial vehicle 4 is controlled to fly to the position to be subjected to firefighting, and carry out the firefighting operation.

The storage device 9 is disposed at the head end of the elevating firefighting truck, the combined arm support or ladder of the elevating firefighting truck is unfolded as a transfer point for high-altitude operation, the water hose 6 is also prevented from being twisted and tripped on the ground, and a horizontal span of the combined arm support or ladder also reduces a horizontal flying distance of the unmanned aerial vehicle 4 and improve the situation that the unmanned aerial vehicle 4 is prone to inclined pulling when towing the water hose 6. The existing unmanned aerial vehicle 4 tows the water hose 6 for high-rise firefighting in combination with the urban main battle firefighting truck or the ground movable foam preparation system, and special personnel are required to tidy the water hose 6 on the ground to avoid winding and excessive inclined pulling.

A specific structure of the unmanned aerial vehicle 4 will be described below.

Referring to Fig. 1 and Fig. 2, in some embodiments, the unmanned aerial vehicle 4 includes a body 401, rotor wings 402 and a fire extinguishing agent spraying device 403. There are a plurality of rotor wings 402, and each rotor wing 402 is disposed at the top of the body 401. The height of the fire extinguishing agent spraying device 403 is lower than heights of the rotor wings 402 of the unmanned aerial vehicle 4.

The unmanned aerial vehicle 4 is an electric multi-rotor wing unmanned aerial vehicle, and is provided with a towing six-dimensional force detection device, an anemometer, a camera, a Beidou navigation device, a gyro stabilizing mechanism and a power system, etc. These structures are all electrically connected with a flight control system of the unmanned aerial vehicle 4, and are used for collecting information such as a real-time stress state of the towed water hose 6, an instantaneous wind speed, a surrounding obstacle situation, a fire extinguishing agent spraying state and a firefighting effect, as well as aerial positioning coordinates during high-altitude operation. The information is transmitted to a wireless operation and control device through the flight control system. The fire extinguishing agent from the transfer pipeline 5 is conveyed up through the water hose 6, and then conveyed to the fire extinguishing agent spraying device 403 through a built-in pipeline of the unmanned aerial vehicle 4.

The body 401 is a main body part of the unmanned aerial vehicle 4, and conventional integrated components of the unmanned aerial vehicle 4, such as the camera, the navigation device, a gyro stabilization mechanism, the power system and the flight control system, are integrated into the body 401. A landing gear is disposed below the body 401.

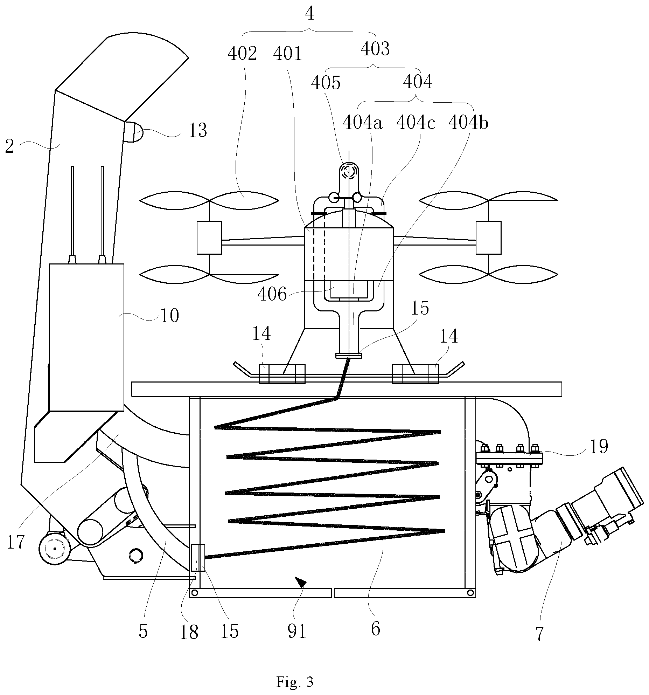

Referring to Fig. 3, in some other embodiments, the implementation of the fire extinguishing agent spraying device 403 of the unmanned aerial vehicle is different from that described above. Specifically, the fire extinguishing agent spraying device 403 includes a conveying pipe 404 and a spraying pipe 405. The conveying pipe 404 penetrates from the bottom of the body 401 to the top of the body 401, the spraying pipe 405 is in fluid communication with the conveying pipe 404, and the position of the spraying pipe 405 is higher than positions of the rotor wings 402.

The fire extinguishing agent spraying device 403 is used for a spraying fire extinguisher. The unmanned aerial vehicle 4 is not provided with a fire extinguishing agent storage element per se, and the fire extinguishing agent is conveyed to the spraying pipe 405 via the conveying pipe 404. The conveying pipe 404 is in fluid communication with the fire extinguishing agent storage element located on the firefighting truck, even the ground, other tall buildings or a fixed object, so as to convey the fire extinguishing agent to the spraying pipe 405 of the fire extinguishing agent spraying device 403.

Referring to Fig. 3, in some embodiments, the conveying pipe 404 includes a first pipeline 404a, second pipelines 404b and a third pipeline 404c. The first pipeline 404a is located below the body 401. The second pipelines 404b are located downstream of the first pipeline 404a and are in fluid communication with the first pipeline 404a. There are at least two second pipelines 404b, and respective second pipelines 404b are symmetrically disposed with respect to a central axis of the body 401. The third pipeline 404c is located downstream of respective second pipelines 404b and is in fluid communication with respective second pipelines 404b.

Each of the first pipeline 404a, the second pipelines 404b and the third pipeline 404c are made of a light material, such as aluminum alloy and other ultra-light metals. The conveying pipe 404 adopts the symmetrical structure of dividing first and then combining, which not only facilitates the installation and fixation of the conveying pipe 404, but also enables the unmanned aerial vehicle to maintain a good balance more easily.

In some embodiments, a central axis of the first pipeline 404a coincides with the central axis of the body 401, and/or the central axis of the third pipeline 404c coincides with the central axis of the body 401. In this way, it is easier for the unmanned aerial vehicle 4 to maintain a balance when working in the air.

In some embodiments, the unmanned aerial vehicle 4 further includes a wind speed detection element 8, and the wind speed detection element 8 is disposed at the top of the body 401. The wind speed detection element 8 is, for example, an anemometer, and the wind speed at the position where the unmanned aerial vehicle 4 is located is monitored in real time by the anemometer.

Referring to Fig. 3, in some embodiments, the unmanned aerial vehicle 4 further includes a six-dimensional force sensor 406, one end of the six-dimensional force sensor 406 is installed on the body 401 of the unmanned aerial vehicle 4, and the fire extinguishing agent spraying device 403 is installed on the other end of the six-dimensional force sensor 406 to detect a six-dimensional force exerted to the unmanned aerial vehicle by a towed object during flight of the unmanned aerial vehicle 4. The towed object is, for example, the ultra-light water hose 6 specifically. The unit weight of the ultra-light water hose 6 is less than or equal to 150 g/m. In some embodiments, the length of the water hose 6 is 90 meters to 110 meters. The water hose of this length can realize the high-altitude firefighting with a height of up to about 120 meters if matched with the existing medium-sized elevating firefighting truck. In some embodiments, the water hose 6 is configured to convey the foam mixed liquid fire extinguishing agent with foam foaming times of 6-8 times.

The following introduces the contents related to a fire extinguishing agent conveying flow path of the fire monitor.

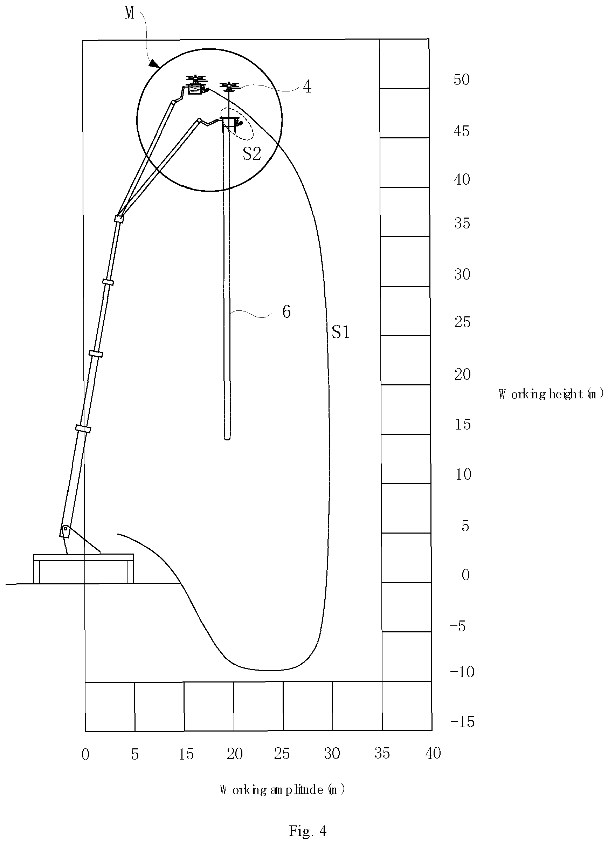

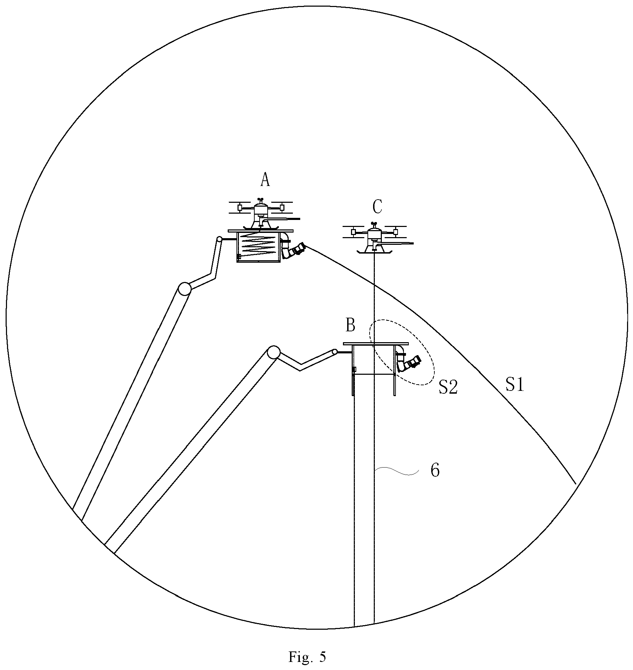

Referring to Fig. 3, in some embodiments, the firefighting truck further includes the fire monitor 7 and a firefighting pipeline 17. The firefighting pipeline 17 is an existing pipeline on the firefighting truck. The transfer pipeline 5 is a branch divided from the middle section of the firefighting pipeline 17. The fire monitor 7 is installed on the support platform 3, and the fire monitor 7 is in fluid communication with the firefighting pipeline 17. In the amplitude variation process of the arm support 2, the fire monitor 7 is subjected to amplitude variation therewith. The limit curve S1 of a safe working range in an elevating firefighting mode is shown in Fig. 4 and Fig. 5. When the unmanned aerial vehicle 4 is used for firefighting, after the arm support 2 is subjected to amplitude variation to a set position, the arm support 2 does not move any more, but remains at this position.

Referring to Fig. 3, in some embodiments, the firefighting truck further includes the first control valve 18 and the second control valve 19. The first control valve 18 is disposed at the transfer pipeline 5 and is configured to control whether the transfer pipeline 5 is opened or not. The second control valve 19 is disposed at the outlet end of the firefighting pipeline 17 and is configured to control whether the firefighting pipeline 17 is opened or not. The second control valve 19 is located at the tail end of the firefighting pipeline 17, and the end part of the transfer pipeline 5 communicated with the firefighting pipeline 17 is located upstream of the second control valve 19. Working states of the first control valve 18 and the second control valve 19 are opposite. The first control valve 18 and the second control valve 19 are, for example, electromagnetic valves. By detecting a state of the fire monitor 7, a state of the unmanned aerial vehicle 4 and a firefighting demand, valve positions of the first control valve 18 and the second control valve 19 are automatically adjusted, so as to realize a required fire extinguishing agent supply state.

The following introduces the specific implementation of a control system of the firefighting truck.

The control system of the firefighting truck includes two major parts, one is a conventional control part of the firefighting truck, and the other is a control part related to control of the unmanned aerial vehicle.

Referring to Fig. 1, in some embodiments, the firefighting truck further includes a main console 11, the data processing module 10 and the unmanned aerial vehicle console 12. The main console 11 is the conventional control part of the firefighting truck, but the part interacting with control of the unmanned aerial vehicle is added to realize safe operation protection and operation and control functions of the conventional elevating firefighting truck as well as signal interaction with the unmanned aerial vehicle. The data processing module 10, the unmanned aerial vehicle console 12, and an unmanned aerial vehicle operation monitor 16 described later are vital parts to realize control of the unmanned aerial vehicle.

The data processing module 10 is installed at the support platform 3 or the tail end of the arm support 2, that is, the top end of the arm support 2 in an extended state. The unmanned aerial vehicle 4 includes a data transmission module, and the data processing module 10 is in communication connection with the data transmission module in a wireless way. The main console 11 is in communication connection with the data processing module 10. The unmanned aerial vehicle console 12 is also in communication connection with the data processing module 10. The unmanned aerial vehicle console 12 is configured to control a conveying amount of the fire extinguishing agent and/or whether to convey the fire extinguishing agent according to state parameters of the unmanned aerial vehicle 4 transmitted by the data transmission module and obtained by the data processing module 10 as well as preset parameters of the unmanned aerial vehicle 4.

The data transmission module and an antenna of the unmanned aerial vehicle 4 does not only transmit conventional uplink/downlink information and instructions between the flight control system and the data processing module 10, but also send input signals of the six-dimensional force sensor and the anemometer, as well as information such as air positioning coordinates to the data processing module 10. The data processing module 10 is also installed on the support platform 3. During operation, as the arm support 2 and the support platform 3 are unfolded in the air, the data processing module 10 is closer to the unmanned aerial vehicle 4 on the whole vehicle, and the communication environment at high altitude is better. Compared with the case that the data processing module 10 is placed at the lower part, the shielding interference of on-site buildings on received and transmitted signals is reduced or even avoided. The communication connection between the data processing module 10 and the unmanned aerial vehicle 4 is realized in a wireless way, and the data processing module 10 is also connected with the main console 11 and the unmanned aerial vehicle console 12 of the elevating firefighting truck in a wired way through cables for interactive control of takeoff flight, spraying of the fire extinguishing agent and the like. Moreover, in order to ensure the operation safety of the unmanned aerial vehicle 4, the data processing module 10 and the unmanned aerial vehicle console 12 also automatically control flow supply and flow discharge of the ground fire extinguishing agent and turn on two electric control locking devices 15 connected with the two ends of the ultra-light water hose 6 according to a predetermined load capacity of the unmanned aerial vehicle 4, a limit value on an ambient wind speed and a distance setting allowing the unmanned aerial vehicle 4 to stay away from a takeoff point, so as to ensure that the unmanned aerial vehicle 4 will not crash due to excessive towing.

In some embodiments, the preset parameters of the unmanned aerial vehicle 4 at least include one of the following: the predetermined load capacity of the unmanned aerial vehicle 4, the limit value of the unmanned aerial vehicle 4 on the ambient wind speed, and the set distance allowing the unmanned aerial vehicle 4 to stay away from the takeoff point. Any of the above four parameters exceeds a threshold, indicating that the unmanned aerial vehicle 4 needs to choose one of the operations of returning, unloading and load shedding and landing.

In some embodiments, the main console 11 and/or the unmanned aerial vehicle console 12 are/is installed on the truck body 1. The unmanned aerial vehicle console 12 is connected with the data processing module 10 disposed at the head end of the elevating firefighting truck in a wired way. Through the unmanned aerial vehicle console 12, operators control the opening of the locking mechanism 14, the opening of the bottom plate of the storage device 9, the takeoff and firefighting operations of the unmanned aerial vehicle 4, the turn-on and turn-off of the electric control locking device 15 at the joint of the transfer pipeline 5 and the water hose 6 and the like.

Through the unmanned aerial vehicle operation monitor 16, a button is manually pressed to select, accept and display the image of a camera 13 at the head end of the elevating firefighting truck or the image of a camera on the conventional integrated component (the camera, the navigation device, the gyro stabilization mechanism, the power system or the flight control system) of the unmanned aerial vehicle 4. The unmanned aerial vehicle console 12 at the turntable is connected with the data processing module 10 disposed at the head end of the elevating firefighting truck in a wired way.

Through the unmanned aerial vehicle console 12, the operators control the opening of a fixed locking mechanism of the unmanned aerial vehicle 4, the opening of the bottom plate of the storage device 9, the takeoff and firefighting operations of the unmanned aerial vehicle 4, the opening of a locking mechanism at the interface of the water hose 6 connected at a transfer conveying port and the like. Through the unmanned aerial vehicle operation monitor, the button is manually pressed to select, accept and display the image of the camera 13 at the head end of the elevating firefighting truck or the image of the camera on the unmanned aerial vehicle 4.

In order to collect data of the unmanned aerial vehicle, in some embodiments, the firefighting truck further includes the camera 13, and the camera 13 is installed at the top of the arm support 2 or the support platform 3, and is configured to detect takeoff and flying processes of the unmanned aerial vehicle 4.

The camera 13 cooperates with the data processing module 10 described above to jointly monitor obstacle information during the takeoff of the unmanned aerial vehicle 4. The data processing module 10 is a vital constituent part of control information transmission, is in signal connection with both the flight control system of the unmanned aerial vehicle 4 and the control system of the elevating firefighting truck, and is used to control the takeoff flight of the unmanned aerial vehicle 4, spraying of the fire extinguishing agent and other operations.

In addition to the above control, it is also necessary to control a connection state of the water hose 6. Referring to Fig. 3 and Fig. 4, in some embodiments, the firefighting truck further includes the two electric control locking devices 15, wherein one electric control locking device 15 is disposed at the transfer pipeline 5 to lock and unlock one end of the water hose 6 and the transfer pipeline 5; the other electric control locking device 15 is disposed at the other end of the first pipeline 404a to lock and unlock the first pipeline 404a and the top end of the water hose 6.

Both ends of the water hose 6 are provided with the electric control locking devices 15, and the water hose 6 is located between the firefighting truck and the unmanned aerial vehicle 4. One electric control locking device 15 is used to cooperate with the unmanned aerial vehicle 4 to lock the connection between a lower interface of the conveying pipe 404 and an upper interface of the ultra-light water hose 6; and the other electric control locking device 15 is used to lock the connection between a lower interface of the ultra-light water hose 6 and a ground fire extinguishing agent supply pipeline interface (that is, the transfer pipeline 5). By controlling the electric control locking devices 15, the water hose 6 is switched between conveying of the fire extinguishing agent and flow discharge.

The following introduces the control part of using the firefighting truck for firefighting.

The firefighting truck has two working modes: the first mode is a firefighting truck elevating firefighting mode. The second mode is a coupled unmanned aerial vehicle firefighting mode.

On the whole, when the elevating firefighting truck only performs the firefighting operation of the conventional elevating firefighting truck, the unmanned aerial vehicle 4 is in position A shown in Fig. 5. The unmanned aerial vehicle 4 is placed on the top of the support platform 3 through the locking mechanism 14. The storage device 9 is located below the support platform 3, and the ultra-light water hose 6 is folded and then placed into the storage device 9.

Referring to Fig. 5, when the elevating firefighting truck performs the firefighting operation of the coupled unmanned aerial vehicle 4, actions of the unmanned aerial vehicle 4 mainly include two processes. The first process is to take off from position B to position C and hover to wait for the supply and conveying of the fire extinguishing agent; the second process is to fly from the position C to a rescue operation surface. The specific description is as follows: firstly, the bottom plate of the storage device 9 is opened. Subsequently, the overlapping part of the water hose 6 in the storage device 9 is lowered by its own gravity, so that the launching operation of the unmanned aerial vehicle 4 is not constrained by overlapping of the ultra-light water hose 6. The unfolded state of the water hose 6 is shown in Fig. 4 and Fig. 5. Then, the unmanned aerial vehicle 4 takes off to a certain height along with the water hose 6 that has not conveyed the fire extinguishing agent, and then hovers, at this time, the fire extinguishing agent starts to be conveyed. After the conveying of the fire extinguishing agent is stable, the unmanned aerial vehicle 4 carries the water hose 6 filled with the fire extinguishing agent to fly to the position to be subjected to firefighting.

Before introducing various firefighting modes in detail, the concrete implementation of the firefighting truck is firstly introduced. The firefighting truck adopts an elevating firefighting truck with an elevating capacity of 45 meters. The firefighting truck has a three-axle chassis, and the overall dimension of the whole truck in a running state is ≤ 12.5 meters. There are two types of fire extinguishing agents, i.e., water and a foam liquid, on the firefighting truck. The fire extinguishing agent conveying pipeline of the elevating firefighting truck has a diameter of ≥ 80 mm. The vehicle-mounted unmanned aerial vehicle 4 is a multi-rotor wing electric unmanned aerial vehicle with a carrying capacity of 50 Kg. When the fire monitor 7 is used for firefighting separately, respective parameters are as follows: foam foaming times N1, foam pressure P1 and foam mixed liquid flow Q1. When the unmanned aerial vehicle 4 is used for firefighting, respective parameters are as follows: foam foaming times N2, foam pressure P2, and foam mixed liquid flow Q2.

The foam foaming times N1 is set in the same change range as N2, and is 6-8 times. The change range of the foam mixed liquid flow Q1 is ≤ 20 liters/second, and Q2 is ≤ 3 liters/second; the foam pressure P1 is ≤ 0.8 MPa, and P2 is ≤ 1.2 MPa. The unmanned aerial vehicle 4 tows the ultra-light water hose 6 of 100 meters. The diameter of the water hose 6 is 45 mm to 55 mm, for example, 50 mm (the unit weight of the water hose 6 is 150 g/m), and the high-rise building fires with a height of 120 meters and a span of 30 meters will be rescued.

The compressed air foam system assembly 106 automatically adjusts the supplied compressed air foam pressure and flow. In order to meet the spraying demand of the fire monitor 7 (20 liters/second ≥ foam mixed liquid flow ≥ 8 liters/second) in the firefighting truck elevating firefighting mode, and also meet the firefighting spraying demand of the high-altitude unmanned aerial vehicle 4 (5 liters/second ≥ foam mixed liquid flow ≥ 1 liter/second) in the coupled unmanned aerial vehicle 4 operation mode, the following control method is adopted in aspects such as preparation and supply state of the fire extinguishing agent.

On the whole, the control strategy and control requirements of the elevating firefighting truck on the compressed air foam system assembly, a valve control module and a safe operation posture control module are different in the two different firefighting modes. The change range of the foam foaming times N1 is 5 to 15 times and the change range of N2 is 6 to 8 times; the change range of the foam mixed liquid flow Q1 is 8 to 20 liters/second, and the change range of Q2 is 1 to 5 liters/second. The foam pressure P2 > P1. The switching states of the first control valve 18 and the second control valve 19 are opposite.

The main console 11 is provided with a firefighting truck elevating firefighting/coupled unmanned aerial vehicle firefighting mode switching button, the button is also used to control the open and close states of the first control valve 18 and the second control valve 19 at the same time, and the open and close states of the first control valve 18 and the second control valve 19 are designed to be opposite. When the switching button is in the firefighting truck elevating firefighting mode, the fire extinguishing ability in this mode depends on the fire extinguishing operation ability of the elevating firefighting truck using the head-end fire monitor 7, which is the same as that of the conventional elevating firefighting truck, both realize large-flow water or foam firefighting by using a vehicle-mounted booster pump, water, foam stock solution, a foam proportional mixer, an air compressor system, etc. The compressed air foam system is operated according to the requirements of the conventional elevating firefighting truck, and will not repeated in detail here.

In addition, the limit curve of the safe working range in the elevating firefighting mode is S1, and the combined arm support is only operated within the safe range to meet the demand that the fire monitor 7 is close to a rescued object. The truck operation method in this mode is the same as that of the conventional elevating firefighting truck, and the movable components newly added to the head end, such as the unmanned aerial vehicle 4, the ultra-light water hose 6 and other related accessories, are motionless relative to the arm head. When the locking mechanism 14 of the unmanned aerial vehicle 4 is not locked, the switching button cannot put the truck in the firefighting truck elevating firefighting mode.

In the coupled unmanned aerial vehicle firefighting mode, the operation posture of the combined arm support is within the safe working range of the firefighting truck elevating firefighting mode, and is limited to a small-range limit curve S2 under a standard working posture required in the coupling operation. The unmanned aerial vehicle 4 launches to carry out the firefighting operation only within this curve range. Once this firefighting mode is determined in this area, the arm support will be restricted from action. When the combined arm support is not within the small range limit curve S2, the switching button cannot put the truck in the coupled unmanned aerial vehicle firefighting mode. Therefore, once the truck is in the coupled unmanned aerial vehicle firefighting mode, the high-rise firefighting only depends on that the unmanned aerial vehicle 4 flies high and approaches the rescued object.

When the locking mechanism 14 is opened, only after the first control valve 18 and the electric control locking device 15 at the transfer pipeline 5 are controlled to be opened and the unmanned aerial vehicle 4 tows the ultra-light water hose 6 to be separated from the truck, the truck can return to the firefighting truck elevating firefighting mode by the switching button, and the combined arm support of the elevating firefighting truck is operated again within the safe range in the firefighting truck elevating firefighting mode.

The two firefighting modes are described in detail below.

The first working mode: firefighting truck elevating firefighting mode.

Aiming at the high-rise fires below 60 meters, the firefighting truck elevating firefighting mode is adopted for operation, and the water-foam dualpurpose fire monitor 7 at the head end of the elevating firefighting truck is mainly adopted for firefighting. The fire monitor 7 sprays a large-flow fire extinguishing agent of ≥ 60 liters/second (water) or ≥ 120 liters/second (compressed air foam with the foaming times of 6-8 times) for firefighting.

In this state, the arm support 2 is subjected to amplitude variation normally, and the limit curve S1 of the safe working range of the fire monitor 7 in the elevating firefighting mode is shown in Fig. 4 and Fig. 5. In Fig. 4, the working height refers to a height of the fire monitor 7 relatives to the ground. The working amplitude refers to a horizontal distance of the fire monitor 7 from a pivot point of the arm support. Under the existing conditions of the related art, it is known that the four-axle elevating firefighting trucks of 40-50 meters can carry about 3 tons of fire extinguishing agent on board, and the operation amplitude reaches about 20 meters, which realize the rescue of high-rise fires below 60 meters well.

In the firefighting truck elevating firefighting mode, the extension and amplitude variation angle of the combined arm support or ladder depend on the stability of the whole machine and the calculation and control of the strength and rigidity of main structural members. The difference from the conventional elevating firefighting trucks is that the weights of the unmanned aerial vehicle 4 and related accessories newly added to the head end are necessarily considered in the calculation, and the posture of the combined arm support or ladder is operated within a safe range to meet the demand that the fire monitor 7 is close to the rescued object. The truck operation method in this mode is the same as that of the conventional elevating firefighting truck, and the movable components newly added to the head end, such as the unmanned aerial vehicle 4, the water hose 6 and other related accessories, are installed in place under combat readiness. In order to simplify and reliably realize the safe operation control of elevating firefighting of the firefighting truck, it is further set that only when the fixed locking mechanism 14 of the unmanned aerial vehicle 4 is locked, the switching button puts the truck in the firefighting truck elevating firefighting mode.

The truck operation in the firefighting truck elevating firefighting mode is basically similar to that of the conventional elevating firefighting truck, and the matters not mentioned are not repeated in detail here. The following focuses on the operation method in the coupled unmanned aerial vehicle firefighting mode.

The second working mode is the coupled unmanned aerial vehicle firefighting mode.

For the high-rise fires over 60 meters, the coupled unmanned aerial vehicle firefighting mode is adopted for operation. In this mode, the water hose 6 is mainly towed by the unmanned aerial vehicle 4, supplied by the fire extinguishing agent preparation and conveying system of the elevating firefighting truck, and launched with a small flow of fire extinguishing agent for approaching and firefighting by the fire extinguishing agent spraying device 403 of the unmanned aerial vehicle 4. The fire extinguishing agent spraying device 403 of the unmanned aerial vehicle 4 sprays a small flow of fire extinguishing agent of ≥ 18 liters/second (compressed air foam with the foaming times of 6-8 times) to launch, so as to approach a fire source for firefighting. In this case, the arm support 2 is no longer operated, and the position of the fire monitor 7 is within the range of the small-range limit curve S2 in Fig. 4 and Fig. 5, and is considered to meet the position conditions required for aerial takeoff of the unmanned aerial vehicle.

Before the unmanned aerial vehicle 4 is controlled for firefighting, the state of the unmanned aerial vehicle 4 is monitored.

Various operations for controlling the unmanned aerial vehicle 4 are realized by jointly operating the main console 11 and the unmanned aerial vehicle console 12 of the elevating firefighting truck. The main console 11 is provided with the firefighting truck elevating firefighting/coupled unmanned aerial vehicle firefighting mode switching button, so as to switch firefighting rescue of the two modes. In different operation modes, the safe operation posture range of the combined arm support or ladder operated and controlled by the new elevating firefighting truck is different, and the operability of the combined arm support or ladder is different.

In the coupled unmanned aerial vehicle firefighting mode, the extension and amplitude variation angle of the combined arm support or ladder still depend on the stability of the whole machine and the calculation and control of the strength and stiffness of the main structural members. The difference is that in addition to the weights of the newly added unmanned aerial vehicle 4 and related accessories, the weight of the ultra-light water hose 6 filled with the fire extinguishing agent and the related influence of the towed water hose 6 under an external wind load are also considered in the calculation. Therefore, the operation posture is within the safe working range of the firefighting truck elevating firefighting mode. In order to simplify and reliably realize the firefighting safe operation control of the coupled unmanned aerial vehicle 4, it is further set that the truck is put into the coupled unmanned aerial vehicle firefighting mode only when the combined arm support or ladder is in a certain small-range standard working posture and the unmanned aerial vehicle 4 is launched to carry out the firefighting operation only in the coupled unmanned aerial vehicle firefighting mode. Moreover, once the truck is in the coupled unmanned aerial vehicle firefighting mode, the combined arm support or ladder of the elevating firefighting truck will be locked in this small-range standard working posture, and the high-rise firefighting only depends on that the unmanned aerial vehicle 4 flies high and approaches the rescued object.

When the switching button is in the coupled unmanned aerial vehicle firefighting mode, a vehicle-mounted controller automatically limits the pressure and flow of the booster pump and the injection pressure and flow of compressed air in real time according to a flying height of the unmanned aerial vehicle 4 and a force feedback of the six-dimensional force detection device, so as to realize the optimal flow for the ultra-light water hose 6 to convey the fire extinguishing agent and the foam foaming times of 6-8 times. The optimal flow for the water hose 6 to convey the fire extinguishing agent refers to the maximum flow under the condition of reasonable fire extinguishing agent spraying pressure of the unmanned aerial vehicle 4 within the load capacity range of the unmanned aerial vehicle 4. The foam foaming times of 6 to 8 times at the bottom are controlled to ensure no influence on actual firefighting efficiency caused by the fact that the foaming times of wet foam at a spraying port of the unmanned aerial vehicle 4 is dissimilated due to segregation during long-distance vertical conveying of the wet foam of low times. When a stress of the six-dimensional force sensor 406 reaches the load capacity of safe operation of the unmanned aerial vehicle 4, or an actually measured wind speed of the high-altitude anemometer reaches the rated instantaneous wind speed of safe operation, the vehicle-mounted controller is also provided with a discharge valve which automatically opens the fire extinguishing agent conveying pipeline to reduce the load of the unmanned aerial vehicle 4 by emergency flow discharge.

For the control system of the firefighting truck, the following operation method is adopted.

Firstly, at the main console 11 at the turntable of the new elevating firefighting truck, the combined arm support is operated to reach the small-range limit curve S2 in the standard working posture required during coupling operation of the unmanned aerial vehicle 4, and then the mode switching button is pressed for the coupled unmanned aerial vehicle firefighting mode.

Secondly, the unmanned aerial vehicle console 12 at the turntable is operated, the bottom plate of the storage device 9, the first control valve 18 and the electric control locking device 15 at the transfer pipeline 5 are opened, the overlapping part of the water hose 6 is put down, the unmanned aerial vehicle 4 is operated and controlled to take off from the support platform 3 and hover, the compressed air foam system assembly 106 of the elevating firefighting truck is operated for working, the fire extinguishing agent spraying device 403 of the unmanned aerial vehicle 4 is enabled to spray wet foam, and the unmanned aerial vehicle 4 is operated and controlled to fly high and approach the rescued target for firefighting.

Finally, when the unmanned aerial vehicle 4 completes the firefighting operation, the operators open the electric control locking device 15 connected with the interface of the ultra-light water hose 6 at the transfer pipeline 5 through the unmanned aerial vehicle console 12, and operate the unmanned aerial vehicle 4 to tow the ultra-light water hose 6 to the ground. Then, the truck is put in the firefighting truck elevating firefighting mode by the switching button, and the truck is collected in the same process as the conventional elevating firefighting truck, which will not be repeated in detail here.

In some embodiments, the firefighting truck is also configured that when the locking mechanism 14 of the unmanned aerial vehicle 4 is opened, only when the locking mechanism connected with the interface of the ultra-light water hose 6 is opened (at this time, the unmanned aerial vehicle 4 can tow the ultra-light water hose 6 to be separated from the truck), the button of the main console 11 can be switched to enable the truck to return to the firefighting truck elevating firefighting mode, and the combined arm support or ladder of the elevating firefighting truck can be operated again within the safe range of the firefighting truck elevating firefighting mode.

According to the firefighting truck provided by the above technical solutions, when the arm support 2 of the elevating firefighting truck is unfolded, the unmanned aerial vehicle 4 tows the ultra-light water hose 6 and launch from the support platform 3, so that the unmanned aerial vehicle 4 realizes a certain launching operation and an operation of approaching an object to be subjected to firefighting by using unfolding actions of the arm support 2, which reduces a flying distance of the unmanned aerial vehicle 4, saves electric power of the unmanned aerial vehicle 4, and enables the unmanned aerial vehicle 4 to perform a firefighting task for a longer time. In addition, by the compressed air foam system of the conventional elevating firefighting truck and relying on the transfer pipeline 5, the unmanned aerial vehicle 4 launches with a small flow of fire extinguishing agent and approaches for firefighting.

Moreover, the firefighting truck according to the embodiments of the present disclosure also has the characteristics of high maneuverability, good site adaptability, larger operation height and span, and faster firefighting operation development speed at high altitude. According to the carrying capacity of the existing electric unmanned aerial vehicle of 50Kg, the rescue tasks of high-rise building fires below 120m are covered by reliably towing the water hose with a diameter ≥ DN40 for 60m to 80m. With technical development, when a more reliable unmanned aerial vehicle 4 provides the larger carrying capacity, this technology realizes towing of the water hose 6 with larger length or diameter, thereby achieving a larger operation range. The technology is adapted to local conditions. The low-altitude firefighting adopts the firefighting truck elevating firefighting mode, the high-altitude firefighting adopts the coupled unmanned aerial vehicle firefighting mode, and greater flexibility and convenience are realized by adopting different ways to approaching the rescued object.

In addition, the firefighting truck according to the embodiments of the present disclosure has a more durable and powerful fire extinguishing ability compared with the existing unmanned aerial vehicles which independently carry firefighting bombs or spray fire extinguishing agents. Continuous firefighting can be realized by a large flow below 60 meters and by a small flow above 60 meters. Compared with the existing mode that the unmanned aerial vehicles throw water hoses to assist the high-rise firefighting of urban main battle firefighting trucks, the firefighting truck according to the embodiments of the present disclosure has the maneuverability and flexibility of high-altitude operation.

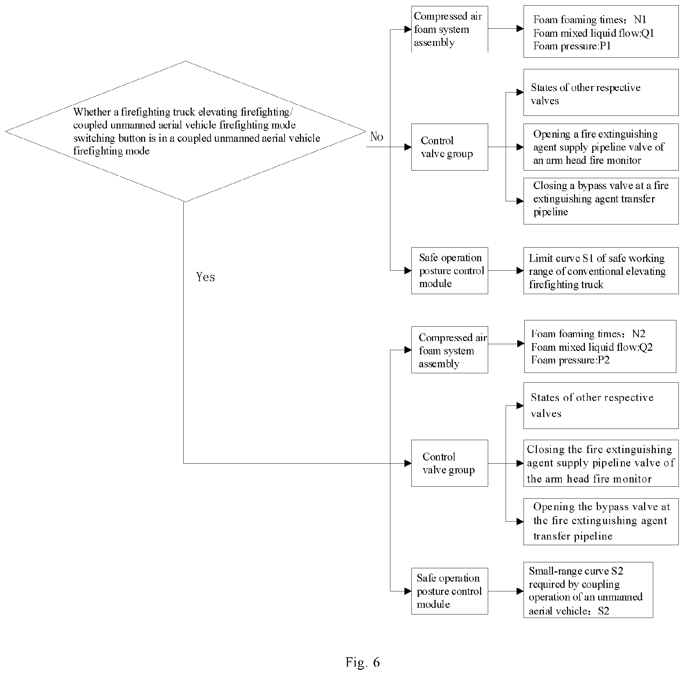

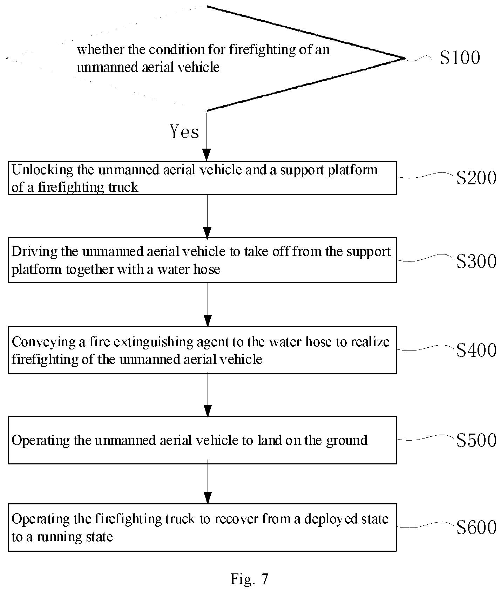

Referring to Fig. 6 and Fig. 7, the embodiments of the present disclosure also provide a firefighting control method of a firefighting truck, which is implemented by the firefighting truck according to any technical solution of the present disclosure. For the implementation of the firefighting truck, please refer to the above, which will not be repeated in detail here. The firefighting control method of a firefighting truck has two working modes: the first mode is the firefighting truck elevating firefighting mode, and the second mode is the coupled unmanned aerial vehicle firefighting mode. Fig. 6 illustrates different parameters in two modes. As introduced above, in the two different firefighting operation modes, the control strategy and control requirements of the elevating firefighting truck on the compressed air foam system assembly, the valve control module and the safe working posture control module are different. The change range of the foam foaming times N1 is 5 to 15 times and the change range of N2 is 6 to 8 times; the change range of the foam mixed liquid flow Q1 is 8 to 20 liters/second, and the change range of Q2 is 1 to 5 liters/second; the foam pressure P2 > P1. The switching states of the first control valve 18 and the second control valve 19 are opposite.

Referring to Fig. 7, the firefighting control method of a firefighting truck includes the following steps:

Step S100: whether the condition for firefighting of the coupled unmanned aerial vehicle is met.

The arm support 2 of the firefighting truck has a first posture and a second posture. The first posture is to use the fire monitor 7 of the firefighting truck for firefighting separately. Under the first posture, the arm support 2 is free for amplitude variation, and the limit curve of the safe working range in the elevating firefighting mode is S1. The second gesture is to use the unmanned aerial vehicle for firefighting separately. Under the second posture, the arm support 2 remains motionless, and the arm support 2 is limited within the range limit curve S2 under the standard working posture required during the coupling operation. The so-called condition includes judging whether the arm support 2 is within the range limit curve S2 under the standard working posture required during the coupling operation. The specific operation is as follows: at the main console 11 at the turntable of the elevating firefighting truck, the combined arm support is operated to reach the small-range limit curve S2 under the standard working posture required for the coupling operation of the unmanned aerial vehicle 4, and then the mode switching button is pressed for the coupled unmanned aerial vehicle firefighting mode.

Step S200: the unmanned aerial vehicle 4 and the support platform 3 of the firefighting truck are unlocked if the condition for firefighting of the unmanned aerial vehicle is met. For the specific implementation of the unmanned aerial vehicle 4 and the connection mode between the unmanned aerial vehicle 4 and the support platform 3, please refer to the contents introduced above, which will not repeated in detail here.

Step S300: the unmanned aerial vehicle 4 is driven to take off from the support platform 3 together with the water hose 6. For the specific control mode, the states of respective control modules, and related states of the first control valve 18 and the second control valve 19, please refer to the contents introduced above, which will not be repeated in detail here.

Before the above step S300, the firefighting control method of a firefighting truck may further include the following step: opening the bottom plate of the storage device 9 under the support platform 3 to put down the water hose 6, so that the water hose 6 is no longer overlapped.

The above step S200 may be specifically divided into the following steps: driving the unmanned aerial vehicle 4 to take off from the support platform 3 together with the water hose 6 to a hovering position, so as to wait for the supply and transportation of the fire extinguishing agent.

Step S400: the fire extinguishing agent is conveyed to the water hose 6, and the unmanned aerial vehicle 4 carries the water hose 6 filled with the fire extinguishing agent and flies to the position to be subjected to firefighting, so as to realize firefighting by the unmanned aerial vehicle 4.

The above step S400 specifically includes the following steps: conveying the fire extinguishing agent to the water hose; after conveying the fire extinguishing agent stably, enabling the unmanned aerial vehicle to carry the water hose filled with the fire extinguishing agent and fly to the position to be subjected to firefighting.

In the process of executing the above step S400, the following steps are simultaneously executed: detecting a distance of the unmanned aerial vehicle 4 relative to the support platform 3 in real time; if the distance between the unmanned aerial vehicle 4 and the support platform 3 exceeds a set value, adjusting the position of the unmanned aerial vehicle 4 in the air, so that the distance between the unmanned aerial vehicle 4 and the support platform 3 does not exceed the set value.

In some embodiments, the distance is D, and D < L-△ε; wherein △ε is the maximum positioning deviation of the unmanned aerial vehicle 4 in horizontal or vertical direction based on an IMU inertial measurement unit and a GPS positioning system per se. L is the length that the water hose 6 is allowed to be effectively towed, and △ε is the maximum positioning deviation of the unmanned aerial vehicle 4 in the horizontal or vertical direction based on the IMU inertial measurement unit and the GPS positioning system thereof. Once the flying distance of the unmanned aerial vehicle 4 from the center of a takeoff platform is close to the D value, the flight control system of the unmanned aerial vehicle 4 automatically restricts the unmanned aerial vehicle from flying farther, and only allows the unmanned aerial vehicle to fly at a reduced distance.

In the firefighting process of the unmanned aerial vehicle 4, the water hose 6 is always towed, and the length of the water hose 6 is certain. Therefore, the distance between the unmanned aerial vehicle 4 and the support platform 3 should not exceed the length of the water hose 6, and in some embodiments, the distance should not exceed 80% of the length of the water hose 6, so that reliable connection can be maintained between the unmanned aerial vehicle 4 and the water hose 6 to effectively convey the fire extinguishing agent. Moreover, the probability of other dangerous situations since the unmanned aerial vehicle 4 is too far away from the support platform 3 is reduced.

In the process of executing the above step S400, the following steps are also executed at the same time: judging whether the unmanned aerial vehicle 4 has completed firefighting or has abnormal situations; if the unmanned aerial vehicle 4 completes firefighting or has abnormal situations, the electric control locking device 15 at the lower end of the water hose 6 is disconnected, and the fire extinguishing agent in the water hose 6 is released to control the unmanned aerial vehicle 4 to fly with the empty water hose 6.

In some embodiments, the abnormal situations include at least one of the following: the power of the unmanned aerial vehicle 4 is insufficient, the load of the unmanned aerial vehicle 4 exceeds a set value, and the wind speed in the environment where the unmanned aerial vehicle 4 is located exceeds a rated loss wind speed

Before taking off and in a flying process of the unmanned aerial vehicle 4, the firefighting control method of a firefighting truck further includes the following steps: the data transmission module of the unmanned aerial vehicle transmits state parameters and preset parameters of the unmanned aerial vehicle to the data processing module installed at the support platform or the tail end of the arm support of the firefighting truck; according to the state parameters of the unmanned aerial vehicle obtained by the data processing module and the preset parameters of the unmanned aerial vehicle, the unmanned aerial vehicle console controls flying of the unmanned aerial vehicle, a conveying amount of the fire extinguishing agent and/or whether to convey the fire extinguishing agent or whether to unload the fire extinguishing agent in the pipeline, so as to ensure that the unmanned aerial vehicle does not crash due to excessive towing. For setting positions and specific operation modes of respective components, please refer to the contents introduced above.

In some embodiments, the preset parameters of the unmanned aerial vehicle include at least one of the following: a predetermined load capacity of the unmanned aerial vehicle, a limit value of the unmanned aerial vehicle on the ambient wind speed, and a set distance allowing the unmanned aerial vehicle to stay away from a takeoff point.

With continued reference to Fig. 6 and Fig. 7, the firefighting control method of a firefighting truck further includes the following steps:
S500: the unmanned aerial vehicle 4 is operated to land on the ground.
S600: the firefighting truck is operated to recover from a deployed state to a running state. For detailed contents, please refer to the above description, which will not be repeated in detail here.

According to the firefighting control method provided by the above technical solutions, a small or medium-sized firefighting truck with a height of 40-50 meters is adopted, and the ultra-light water hose 6 with a height of 60-80 meters is towed by the unmanned aerial vehicle 4, so that high-rise building fires with larger meters and a larger span is efficiently, flexibly and economically put out. Compared with the existing large-scale elevating firefighting trucks, the cost of the apparatuses per se and the later maintenance cost are significantly reduced.

In the descriptions of the present disclosure, it should be understood that the orientation or positional relationships indicated by terms such as "central", "longitudinal", "transverse", "front", "rear", "left", "right", "vertical", "horizontal", "top", "bottom", "inner" and "outer" are based on the orientation or positional relationships shown in the drawings, only for the purposes of the ease in describing the present disclosure and simplification of its descriptions, but not indicating or implying that the specified device or element has to be specifically located, and structured and operated in a specific direction, and therefore, should not be understood as limitations to the protective scope of the present disclosure.

Finally, it should be noted that the above embodiments are only used for illustrating rather than limiting the technical solutions of the present disclosure; although the present disclosure has been described in detail with reference to the preferred embodiments, those ordinary skilled in the art should understand that modifications can still be made to the specific embodiments of the present disclosure or equivalent substitutions can be made to part of technical features; and without departing from the spirit of the technical solutions of the present disclosure, the modifications and equivalent substitutions should be included in the scope of the technical solutions claimed in the present disclosure.

## Claims

1. A firefighting truck, comprising:
a truck body (1) configured to be walkable;
an arm support (2) arranged on the truck body (1);
a support platform (3) arranged at the tail end of the arm support (2);
an unmanned aerial vehicle (4) arranged on the support platform (3);
a transfer pipeline (5) arranged on the arm support (2); and
a water hose (6), one end of which being in fluid communication with the transfer pipeline (5) and the other end of which being detachably connected with the unmanned aerial vehicle (4).

2. The firefighting truck according to claim 1, further comprising:
a fire monitor (7) disposed on the support platform (3); and
a firefighting pipeline (17) in fluid communication with the fire monitor (7).

3. The firefighting truck according to claim 2, further comprising:
a first control valve (18) disposed on the transfer pipeline (5) and configured to control whether the transfer pipeline (5) is opened; and
a second control valve (19) disposed on the firefighting pipeline (17) and configured to control whether the firefighting pipeline (17) is opened;
wherein a working state of the first control valve (18) and a working state of the second control valve (19) are opposite.

4. The firefighting truck according to any one of claims 1-3, further comprising:
a storage device (9) arranged at the bottom of the support platform (3), wherein the storage device (9) is provided with a storage cavity (91); one end of the water hose (6) is in fluid communication with the transfer pipeline (5), the other end of the water hose (6) is in fluid communication with a conveying pipe (404) of the unmanned aerial vehicle (4), and the middle part of the water hose (6) is folded and stored in the storage cavity (91); wherein the bottom of the storage device (9) is configured to be openable and closable.

5. The firefighting truck according to any one of claims 1-4, wherein the arm support (2) is configured to have a first posture and a second posture; wherein under the first posture, the fire monitor (7) of the firefighting truck is used for firefighting, and the arm support (2) is free for amplitude variation; under the second posture, the arm support (2) remains motionless, and the unmanned aerial vehicle (4) is used for firefighting.

6. The firefighting truck according to any one of claims 1-5, further comprising:
a data processing module (10) installed at the support platform (3) or the top end of the arm support (2), wherein the unmanned aerial vehicle (4) comprises a data transmission module, and the data processing module (10) is in communication connection with the data transmission module in a wireless way; and
an unmanned aerial vehicle console (12) in communication connection with the data processing module (10), and configured to control flying of the unmanned aerial vehicle, a conveying amount of a fire extinguishing agent and/or whether to convey the fire extinguishing agent, or whether to unload the fire extinguishing agent in a pipeline according to state parameters of the unmanned aerial vehicle transmitted by the data transmission module and obtained by the data processing module (10) as well as preset parameters of the unmanned aerial vehicle, so as to ensure that the unmanned aerial vehicle does not crash due to excessive towing.

7. The firefighting truck according to claim 6, wherein the preset parameters of the unmanned aerial vehicle (4) at least comprise one of the following: a predetermined load capacity of the unmanned aerial vehicle (4), a limit value of the unmanned aerial vehicle (4) on an ambient wind speed, and a set distance allowing the unmanned aerial vehicle (4) to stay away from a takeoff point.

8. The firefighting truck according to claim 6 or 7, wherein the unmanned aerial vehicle console (12) is installed on the truck body (1).

9. The firefighting truck according to any one of claims 1-8, further comprising: a camera (13) arranged at the top end of the arm support (2) or the support platform (3), the camera (13) being configured to monitor obstacle information in a takeoff process of the unmanned aerial vehicle (4).

10. The firefighting truck according to any one of claims 1-9, further comprising:
a locking mechanism (14) installed on the support platform (3) to fix the unmanned aerial vehicle (4) and the support platform (3).

11. The firefighting truck according to any one of claims 1-10, wherein the top end of the transfer pipeline (5) extends to the support platform (3), and the bottom end of the transfer pipeline (5) is located at the truck body (1).

12. The firefighting truck according to any one of claims 1-11, wherein the unmanned aerial vehicle (4) comprises:
a body (401);
a plurality of rotor wings (402), each of which being disposed at the top of the body (401); and
a fire extinguishing agent spraying device (403) comprising a conveying pipe (404) and a spraying pipe (405), wherein the conveying pipe (404) penetrates from the bottom of the body (401) to the top of the body (401), the spraying pipe (405) is in fluid communication with the conveying pipe (404), and the position of the spraying pipe (405) is higher than the positions of the rotor wings (402).

13. The firefighting truck according to claim 12, wherein the conveying pipe (404) comprises:
a first pipeline (404a) located below the body (401);
second pipelines (404b) located downstream of the first pipeline (404a) and in fluid communication with the first pipeline (404a), wherein at least two second pipelines (404b) are disposed, and respective second pipelines (404b) are symmetrically disposed relative to a central axis of the body (401); and
a third pipeline (404c) located downstream of the respective second pipelines (404b) and in fluid communication with the respective second pipelines (404b).

14. The firefighting truck according to claim 13, further comprising:
two electric control locking devices (15), wherein one electric control locking device (15) is disposed on the transfer pipeline (5) to lock and unlock one end of the water hose (6) and the transfer pipeline (5); wherein the other electric control locking device (15) is disposed at the other end of the first pipeline (404a) to lock and unlock the first pipeline (404a) and the top end of the water hose (6).

15. The firefighting truck according to any one of claims 1-14, further comprising:
a compressed air foam system assembly (106) installed on the truck body (1) and in fluid communication with the transfer pipeline (5) so as to convey the fire extinguishing agent to the transfer pipeline (5); the compressed air foam system assembly (106) being configured to prepare a foam fire extinguishing agent with set parameters.

16. The firefighting truck according to claim 15, wherein the set parameters at least comprise one of the following: foam foaming times, a flow of a foam mixed liquid, and a foam pressure.
